# FASCICULE DE BREVET EUROPEEN

(11) **EP 4 199 502 B1**
(45) Date de publication et mention de la délivrance du brevet: **27.11.2024**
(21) Numéro de dépôt: 22213835.6
(22) Date de dépôt: 15.12.2022
(51) Int. Cl.: H04N 5/60, H04R 3/00, H04N 21/2368, H04N 21/439, H04N 21/242, H04N 21/43, H04W 56/00

(54) **DISPOSITIF ET PROCEDE POUR LA RESTITUTION AUDIO-VIDEO SYNCHRONISEE**
VORRICHTUNG UND VERFAHREN ZUR SYNCHRONISIERTEN AUDIO-VIDEO-WIEDERGABE
DEVICE AND METHOD FOR SYNCHRONIZED AUDIO-VIDEO RENDERING

(30) Priorité: 20.12.2021 FR 2114048
(43) Date de publication de la demande: 21.06.2023
(73) Titulaire: Sagemcom Broadband SAS, 92270 Bois-Colombes (FR)
(72) Inventeur: ROUHART, Guillaume, 92500 RUEIL MALMAISON (FR)
(74) Mandataire: Cabinet Boettcher

(56) Documents cités:
- EP-A1- 3 840 388
- US-A1- 2005 281 255
- US-A1- 2014 259 050
- US-A1- 2018 077 443
- US-A1- 2018 317 192

## Description

L'invention concerne le domaine de la restitution audio-vidéo synchronisée.

### ARRIERE PLAN DE L'INVENTION

Un système multimédia comprend classiquement un équipement de diffusion audio-vidéo, par exemple un boitier décodeur audio-vidéo, et un équipement de restitution audio, par exemple une enceinte audio, connectés entre eux via un lien audio unidirectionnel (analogique ou numérique).

L'équipement de diffusion audio-vidéo diffuse alors un flux audio-vidéo comprenant un flux vidéo et un flux audio. Généralement, l'équipement de diffusion audio-vidéo fait restituer le flux vidéo (par exemple par une télévision) et le flux audio est restitué par l'équipement de restitution audio. Dans un tel cas, il est essentiel de correctement synchroniser le flux audio et le flux vidéo.

Il est connu de pouvoir ajuster manuellement un retard ou une avance du flux audio via par exemple un curseur situé sur l'équipement de diffusion audio-vidéo. Il s'agit cependant d'une solution peu aisée pour un utilisateur.

Il est également connu que l'équipement de diffusion audio-vidéo et l'équipement de restitution audio partagent une horloge de référence. Dans ce cas, l'équipement de diffusion audio-vidéo transmet le flux audio en y intégrant des informations d'horodatage (par exemple un *timestamp RTP*)*.* L'information d'horodatage permet alors de synchroniser le flux audio et le flux vidéo. Il s'agit néanmoins d'une solution qui impose de mettre en oeuvre des échanges complexes entre les deux équipements (définition d'une horloge de référence, détection d'un échantillon audio d'étalonnage, mise en oeuvre d'une interface de programmation pour décoder les informations d'horodatages). De plus, elle nécessite une étape d'installation et de configuration pendant laquelle il ne sera pas possible d'utiliser les équipements. Il y aura donc une interruption du service. Enfin, l'étape d'installation et de configuration est lancée à l'initiative de l'utilisateur et n'est donc pas réalisée de façon automatique.

Le document US 2014/259050 divulgue un appareil facilitant la synchronisation dynamique de l'audio et de la vidéo entre l'amplificateur et le téléviseur, comprenant un dispositif multimédia comprenant une logique pour synchroniser la sortie audio à l'affichage vidéo correspondant en fonction de la sortie audio du dispositif d'affichage.

Le document US 2018/317192 divulgue une méthode de synchronisation de dispositifs électroniques, par exemple un dispositif sans fil portable, impliquant la lecture de données audio en synchronisation avec un deuxième dispositif de lecture audio sur la base d'un deuxième signal de synchronisation émis par un troisième dispositif de lecture audio.

### OBJET DE L'INVENTION

Un but de l'invention est de synchroniser de façon simple, sans interruption de service et sans intervention d'un utilisateur, un flux vidéo et un flux audio issus d'un flux audio-vidéo reçu par un boîtier décodeur audio-vidéo, le flux audio étant transmis par le boîtier décodeur audio-vidéo à un équipement de restitution audio pour sa restitution.

### RESUME DE L'INVENTION

En vue de la réalisation de cet objet, on propose un boîtier décodeur audio-vidéo agencé pour recevoir un flux audio-vidéo comprenant un flux audio entrant et un flux vidéo entrant, le boîtier décodeur audio-vidéo étant destiné à être connecté à un équipement de restitution audio via un lien audio unidirectionnel et via un lien de communication,

le boîtier décodeur audio-vidéo comportant une première unité de traitement agencée pour :
- introduire des données d'identification dans le flux audio entrant pour produire un flux audio sortant, les données d'identification comprenant au moins un identifiant du boîtier décodeur audio-vidéo;
- transmettre ledit flux audio sortant à l'équipement de restitution audio via le lien audio unidirectionnel pour que ledit équipement de restitution audio restitue ledit flux audio sortant via au moins un haut-parleur ;
- recevoir, via le lien de communication, une valeur de latence audio induite par l'équipement de restitution audio ;
- synchroniser un flux vidéo sortant, produit à partir du flux vidéo entrant, avec le flux audio sortant en utilisant la valeur de latence audio, et faire restituer le flux vidéo sortant, la première unité de traitement étant agencée pour synchroniser le flux vidéo sortant avec le flux audio sortant en appliquant, au flux vidéo entrant, un délai vidéo égal à la valeur de latence audio pour produire ledit flux vidéo sortant.

Le boîtier décodeur audio-vidéo selon l'invention est donc particulièrement avantageux car un utilisateur a simplement besoin de connecter le boîtier décodeur audio-vidéo et l'équipement de restitution audio via le lien audio unidirectionnel et le lien de communication pour que la synchronisation de la restitution du flux vidéo sortant et du flux audio sortant soit effectuée. Aucune initiative de la part de l'utilisateur n'est donc requise.

En outre, la transmission des données d'identification via le lien audio unidirectionnel et la réception de la valeur de latence audio via le lien de communication sont des échanges de données simples et qui ne nécessitent pas d'interrompre la restitution du flux audio sortant et du flux audio sortant.

Selon un mode particulier, le lien de communication est un réseau de communication, la première unité de traitement étant alors agencée pour mettre en oeuvre une interface de programmation et pour utiliser l'interface de programmation pour recevoir la valeur de latence audio.

De préférence, les données d'identification comportent une information indiquant que l'équipement de diffusion audio-vidéo supporte l'interface de programmation.

Optionnellement, les données d'identification comportent en outre une adresse réseau dudit équipement de diffusion audio-vidéo dans le réseau de communication.

Selon un mode particulier, le lien audio unidirectionnel est un lien analogique, les données d'identification sont transmises par un signal électrique ayant une fréquence n'appartenant pas à un spectre fréquentiel sonore audible pour une oreille humaine.

Selon un mode particulier, le lien de communication audio est un lien numérique, les données d'identification sont intégrées dans des trames de données audio les données d'identification étant intégrées dans des trames de données spécifiques séparées des trames de données audio intégrant des données audios du flux audio sortant.

Avantageusement, la première unité de traitement est agencée pour synchroniser le flux vidéo sortant avec le flux audio sortant en appliquant, au flux vidéo entrant, un délai vidéo égal à la valeur de latence audio pour produire ledit flux vidéo sortant.

Optionnellement, la première unité de traitement est en outre agencée pour recevoir une heure d'expiration via le lien de communication, l'heure d'expiration étant une heure à partir de laquelle ladite première unité de traitement remet le délai vidéo à zéro.

Optionnellement, la première unité de traitement est agencée pour démarrer un décompteur lorsque la valeur de latence audio est reçue, la première unité de traitement étant en outre agencée pour remettre le délai vidéo à zéro lorsque ledit décompteur est dans un état prédéterminé.

Optionnellement, lorsque la première unité de traitement a introduit les données d'identification un nombre de fois égal à un nombre prédéterminé sans recevoir la valeur de latence audio alors ladite première unité de traitement remet le délai vidéo à zéro.

L'invention concerne également un procédé de diffusion audio-vidéo, mis en oeuvre dans la première unité de traitement d'un boîtier décodeur audio-vidéo tel que précédemment décrit, comprenant les étapes de :
- introduire les données d'identification dans le flux audio entrant pour produire le flux audio sortant, les données d'identification comprenant au moins l'identifiant du boîtier décodeur audio-vidéo ;
- transmettre ledit flux audio sortant à l'équipement de restitution audio via le lien audio unidirectionnel pour que ledit équipement de restitution audio restitue ledit flux audio sortant via au moins un haut-parleur ;
- recevoir, via le lien de communication, la valeur de latence audio induite par l'équipement de restitution audio ;
- synchroniser un flux vidéo sortant, produit à partir du flux vidéo entrant, avec le flux audio sortant en utilisant la valeur de latence, et faire restituer le flux vidéo sortant, la synchronisation consistant à appliquer, au flux vidéo entrant, un délai vidéo égal à la valeur de latence audio pour produire ledit flux vidéo sortant.

L'invention concerne également un équipement de restitution audio comportant au moins un haut-parleur et agencé pour être connecté à un boîtier décodeur audio-vidéo via un lien audio unidirectionnel et un lien de communication, et pour restituer, via le ou les haut-parleurs, un flux audio sortant qui lui est transmis par le boîtier décodeur audio-vidéo via le lien audio unidirectionnel ;
l'équipement de restitution audio comprenant en outre une deuxième unité de traitement agencé pour :
- acquérir le flux audio sortant ;
- extraire et décoder des données d'identification intégrées dans le flux audio sortant, les données d'identification comprenant au moins un identifiant du boîtier décodeur audio-vidéo ;
- transmettre une valeur de latence audio induite par ledit équipement de restitution audio, via le lien de communication, au boîtier décodeur audio-vidéo en utilisant les données d'identification décodées pour se connecter au décodeur.

Avantageusement, la deuxième unité de traitement est agencée pour retirer les données d'identification intégrées dans le flux audio sortant de telle sorte que l'équipement de restitution audio ne restitue pas lesdites données d'identification.

Selon un mode particulier, l'équipement de restitution audio étant une enceinte audio.

L'invention concerne également un procédé de restitution audio, mis en oeuvre dans la deuxième unité de traitement d'un équipement de restitution audio tel que précédemment décrit, comprenant les étapes de :
- acquérir le flux audio sortant ;
- extraire et décoder les données d'identification intégrées dans le flux audio sortant, les données d'identification comprenant au moins l'identifiant du boîtier décodeur audio-vidéo ;
- transmettre la valeur de latence audio induite par ledit équipement de restitution audio, via le lien de communication au boîtier décodeur audio-vidéo en utilisant les données d'identification décodées pour se connecter au décodeur;
- restituer le flux audio sortant via le ou les haut-parleurs.

D'autres caractéristiques et avantages de l'invention ressortiront à la lecture de la description qui suit de modes de réalisation particuliers non limitatifs de l'invention.

### BREVE DESCRIPTION DU DESSIN

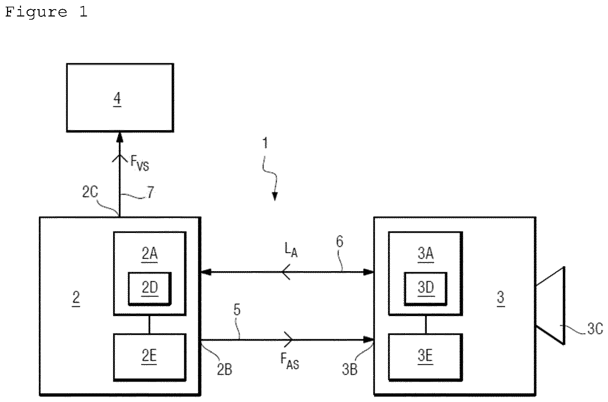

La description de l'invention fait référence à la figure 1 annexée qui représente un système multimédia selon l'invention.

### DESCRIPTION DETAILLEE DE L'INVENTION

En référence à la figure 1, il est décrit un système multimédia 1 comprenant un équipement de diffusion audio-vidéo 2 qui est en l'occurrence un boitier décodeur audio-vidéo, un équipement de restitution audio 3 qui est en l'occurrence une enceinte audio, et un équipement de restitution audio-vidéo 4 qui est en l'occurrence une télévision. Dans la suite, on parlera donc du boitier décodeur 2, de l'enceinte audio 3 et de la télévision 4.

Le boitier décodeur 2 comporte une première unité de traitement 2A, une sortie audio 2B et une sortie vidéo 2C.

La première unité de traitement 2A comporte au moins un premier composant de traitement 2D qui peut être un DSP (en anglais, *Digital Signal Processor*), un processeur, un microcontrôleur, un FPGA (en anglais, *Field Programmable Gate Array*) ou encore un ASIC (en anglais, *Application-Specific Integrated Circuit).*

Le boitier décodeur 2 comporte en outre au moins une première mémoire 2E connectée au ou aux premiers composants de traitement 2D. La première mémoire 2E forme un support d'enregistrement lisible par ordinateur, sur lequel est enregistré au moins un programme d'ordinateur comprenant des instructions permettant de mettre en oeuvre le procédé de diffusion audio-vidéo qui va être décrit.

L'enceinte audio 3 comporte une deuxième unité de traitement 3A, une entrée audio 3B et au moins un haut-parleur 3C.

La deuxième unité de traitement 3A comporte au moins un deuxième composant de traitement 3D qui peut être un DSP (en anglais, *Digital Signal Processor*), un processeur, un microcontrôleur, un FPGA (en anglais, *Field Programmable Gate Array*) ou encore un ASIC (en anglais, *Application-Specific Integrated Circuit).*

L'enceinte audio 3 comporte en outre au moins une deuxième mémoire 3E connectée au ou aux deuxièmes composants de traitement 3D. La deuxième mémoire 3E forme un support d'enregistrement lisible par ordinateur, sur lequel est enregistré au moins un programme d'ordinateur comprenant des instructions permettant de mettre en oeuvre un procédé de restitution audio qui va être décrit.

Le boitier décodeur 2 est connecté à l'enceinte audio 3 via un lien audio unidirectionnel 5 (du boitier décodeur 2 vers l'enceinte audio 3). Plus précisément, le lien audio unidirectionnel 5 connecte la sortie audio 2B du boitier décodeur 2 à l'entrée audio 3B de l'enceinte audio 3.

La sortie audio 2B du boitier décodeur 2 et l'entrée audio 3B de l'enceinte audio 3 peuvent être des ports audio analogiques. Le lien audio unidirectionnel 5 peut ainsi être un câble coaxial à connecteurs RCA ou Jack. Le lien audio unidirectionnel 5 est bien sûr utilisé très classiquement pour relier un boitier décodeur et une enceinte audio et est, dans l'art antérieur, dédié à la transmission de signaux audio depuis le boitier décodeur vers l'enceinte audio.

La sortie audio 2B du boitier décodeur 2 et l'entrée audio 3B de l'enceinte audio 3 peuvent en outre être des ports audio numériques (par exemple S/PDIF). Le lien audio unidirectionnel 5 peut ainsi être un câble coaxial à connecteurs RCA ou encore une fibre optique à connecteurs TOSLINK.

Le boitier décodeur 2 est en outre connecté à l'enceinte audio 3 via un lien de communication 6. Le lien de communication 6 est ici un lien bidirectionnel mais pourrait être un lien unidirectionnel (de l'enceinte audio 3 vers le boitier décodeur 2). Le lien de communication est lui aussi utilisé très classiquement pour permettre à un boitier décodeur et à une enceinte de communiquer.

Le boitier décodeur 2 est en outre connecté à la télévision 4 via un lien 7. Plus précisément, le lien 7 connecte la sortie vidéo 2C du boitier décodeur 2 à la télévision 4. Le lien 7 est par exemple un câble HDMI (en anglais, *High-Definition Multimedia Interface*) et la sortie vidéo 2C est donc par exemple un port HDMI.

Le boitier décodeur 2 est agencé pour recevoir un flux audio-vidéo produit par une source (non représentée) qui peut être par exemple une source de type télédiffusion (en anglais, *Broadcasting*) ou de type OTT (en anglais, *Over-The-Top*)*.* Le flux audio-vidéo comprend un flux audio entrant et un flux vidéo entrant.

La première unité de traitement 2A du boitier décodeur 2 est agencée pour introduire des données d'identification dans le flux audio entrant afin de produire un flux audio sortant F_{AS}. Les données d'identification comprennent au moins un identifiant du boitier décodeur 2. Plus précisément, le boitier décodeur 2 comprend des *buffers* audio (non représentés) comprenant le flux audio entrant sous forme d'échantillons audio qui sont envoyés à la première unité de traitement 2A.

Avantageusement, les données d'identification sont introduites, par la première unité de traitement 2A dans le flux audio entrant, via des techniques de tatouage numérique (en anglais, *watermarking*) et par exemple avec un code natif *audioramark.* Les techniques de tatouage numérique sont connues et consistent à ajouter des informations dans le flux audio entrant.

La première unité de traitement 2A du boitier décodeur 2 est en outre agencée pour transmettre le flux audio sortant à l'enceinte audio 3 via le lien audio unidirectionnel 5 (via la sortie audio 2B) pour que ladite enceinte audio 3 restitue ledit flux audio sortant.

L'enceinte audio 3 a une latence audio intrinsèque correspondant au temps de transit du flux audio sortant entre sa réception sur l'entrée audio 3B et sa restitution par le ou les haut-parleurs 3C de ladite enceinte audio 3.

La deuxième unité de traitement 3A de l'enceinte audio 3 est agencée pour acquérir le flux audio sortant F_{AS} (reçu sur l'entrée audio 3B de l'enceinte audio 3 via le lien audio unidirectionnel 5) et pour extraire et décoder les données d'identification intégrées dans le flux audio sortant par la première unité de traitement 2A du boitier décodeur 2.

La deuxième unité de traitement 3A est en outre agencée pour transmettre une valeur de latence audio L_{A}, via le lien de communication 6, au boitier décodeur 2. Ainsi, la première unité de traitement 2A du boitier décodeur 2 est agencée pour recevoir, via le lien de communication 6, la valeur de la latence audio L_{A} de l'enceinte audio 3.

La première unité de traitement 2A est en outre agencée pour synchroniser un flux vidéo sortant Fvs, produit par ladite première unité de traitement 2A à partir du flux vidéo entrant, en utilisant la valeur de latence audio L_{A} de l'enceinte audio 3.

Ici, la première unité de traitement 2A synchronise le flux vidéo sortant avec le flux audio sortant en appliquant, au flux vidéo entrant, un délai vidéo égal à la valeur de latence audio pour produire ledit flux vidéo sortant. Plus précisément, le boitier décodeur 2 comprend des *buffers* vidéo (non représentés) comprenant le flux vidéo entrant sous forme d'échantillons vidéo. Les *buffers* vidéo sont configurables - par la première unité de traitement 2A - et permettent notamment de retarder le flux vidéo entrant en fonction de la valeur de latence audio reçue via le lien de communication 6. La première unité de traitement 2A permet donc de « retarder » la restitution de la vidéo par la télévision 4 pour que celle-ci soit synchronisée avec la restitution de l'audio par l'enceinte audio 3.

La première unité de traitement 2A est en outre agencée pour transmettre le flux vidéo sortant Fvs à la télévision 4 via le lien 7 afin de faire restituer ledit flux vidéo sortant par ladite télévision 4.

En outre, la première unité de traitement 2A peut également transmettre le flux audio sortant à la télévision 4 via le lien 7 afin de faire restituer ledit flux audio sortant par un ou plusieurs haut-parleurs internes à la télévision 4.

Dans un mode de réalisation particulier de l'invention, le lien de communication 6 est mis en oeuvre par un réseau de communication - par exemple, un réseau de communication avec une étendue spatiale restreinte (en anglais, *Local Area Network*). Le boitier décodeur 2 et l'enceinte audio 3 sont ainsi connectés au réseau de communication (dans le même réseau) et utilisent un même protocole. Classiquement, l'enceinte audio 3 est connectée au réseau de communication pour permettre l'utilisation des services d'« *audio streaming »* ou des fonctions d'assistance vocale. L'enceinte audio 3 est ainsi une enceinte connectée.

La première unité de traitement 2A est ainsi agencée pour mettre en oeuvre une interface de programmation (en anglais, *API* - *Application Programmeur Interface,* par exemple un *Websocket* ou un serveur *HTTP*).

Les données d'identification dans le flux audio sortant comportent une information indiquant que le boitier décodeur 2 supporte l'interface de programmation, par exemple un identifiant qui peut être générique ou unique. Par exemple, l'identifiant est un UUID de 128 bits (en anglais, *Universally Unique Identifier).*

Optionnellement, les données d'identification comportent en outre une adresse réseau du boitier décodeur 2 dans le réseau de communication (par exemple, une adresse IPv4 ou IPv6 sur 128 bits).

Les données d'identification permettent ainsi à la deuxième unité de traitement 3A de l'enceinte audio 3 de savoir que ladite enceinte audio 3 est connectée à un équipement (ici le boitier décodeur 2) supportant l'interface de programmation pour la synchronisation de la restitution du flux vidéo sortant et du flux audio sortant.

Lorsque la deuxième unité de traitement 3A de l'enceinte audio 3 acquiert le flux audio sortant et détecte les données d'identification du boitier décodeur 2 alors l'interface de programmation est appelée (le format de l'interface de programmation mis en oeuvre par la première unité de traitement 2A du boitier décodeur 2 étant préalablement connu par la deuxième unité de traitement 3A de l'enceinte audio 3) :
- Si les données d'identification comportent l'identifiant qui est un identifiant générique et l'adresse réseau du boitier décodeur 2 alors la deuxième unité de traitement 3A de l'enceinte audio 3 se connecte directement au boitier décodeur 2, via le lien de communication 6 (c'est-à-dire le réseau de communication), en utilisant ladite adresse réseau du boitier décodeur 2.
- Si les données d'identification comportent seulement l'identifiant qui est un identifiant unique du boitier décodeur 2 alors la deuxième unité de traitement 3A de l'enceinte audio 3 peut effectuer un scan dans le réseau de communication pour rechercher le boitier décodeur connecté au réseau de communication répondant à l'identifiant unique puis appeler l'interface de programmation avec l'identifiant unique (c'est à la charge de chaque boitier décodeur dans le réseau de communication de filtrer les messages ne leur étant pas destinés). La deuxième unité de traitement 3A de l'enceinte audio 3 peut également envoyer un message de type télédiffusion sur le réseau de communication (encore une fois, c'est à la charge de chaque boitier décodeur dans le réseau de communication de filtrer les messages ne leur étant pas destinés).
- Si les données d'identification comportent l'identifiant qui est un identifiant unique et l'adresse réseau du boitier décodeur 2 alors la deuxième unité de traitement 3A l'enceinte audio 3 se connecte directement au boitier décodeur 2, via le lien de communication 6 (c'est-à-dire le réseau de communication), en utilisant ladite adresse réseau du boitier décodeur 2.

La première unité de traitement 2A du boitier décodeur 2 utilise alors l'interface de programmation pour recevoir la valeur de latence audio de l'enceinte audio 3. Une fois la valeur de latence audio reçu, la première unité de traitement 2A peut synchroniser la restitution du flux audio sortant et du flux vidéo sortant.

Comme indiqué précédemment, les données d'identification peuvent être introduites dans le flux audio entrant via des techniques de tatouage numérique. Le choix de la technique la plus adéquates impose de se positionner parmi une pluralité de critères.

De préférence, les données d'identification introduites dans le flux audio entrant ne sont pas affectées par des traitements audios tels que la compression, le filtrage (comme la réverbération), la modification du spectre audio ou encore les conversions analogique-numérique et numérique-analogique.

Avantageusement, les données d'identification sont introduites le plus tardivement possible dans la chaine de traitement audio, c'est-à-dire en amont direct de la transmission du flux audio sortant à l'enceinte audio 3 (c'est-à-dire en amont direct de la sortie audio 2B du boitier décodeur 2). Par « en amont », il est entendu du côté de la source produisant le flux audio-vidéo. Ainsi, il est préférable que les traitement audios appliqués au flux audio entrant (par exemple par la première unité de traitement 2A du boitier décodeur 2) soient réalisés avant l'introduction des données d'identification par ladite première unité de traitement audio 2A. Les données d'identification seront ainsi seulement affectées par des étapes de conversions analogique-numérique et numérique-analogique. Il sera alors possible d'utiliser une technique de tatouage numérique simple qui ne présente pas une robustesse très élevée aux traitements audios.

En outre, transmettre le flux audio sortant via le lien audio unidirectionnel 5 avec un débit de données élevé peut affecter la fiabilité des données d'identification. Par exemple, dans le cas pour lequel les données d'identification comportent un identifiant UUID sur 128 bits et une adresse réseau IPv4 ou IPv6 sur 128 bits (du boitier décodeur 2) alors le débit de données est de préférence un débit classique d'environ 10bps (bits par secondes). Dans ce cas, la deuxième unité de traitement 3A de l'enceinte audio 3 sera en mesure de décoder les données d'identification en moins de 30 secondes.

En outre, selon l'invention, les données d'identification introduites dans le flux audio sortant ne comportent pas d'informations confidentielles ou pouvant affecter la sécurité du boitier décodeur 2 et plus largement du système multimédia 1. Il est néanmoins prévu que, dans le cas pour lequel la première unité de traitement 2A du boitier décodeur 2 met en oeuvre l'interface de programmation, l'accès à ladite interface de programmation soit sécurisé (par exemple en utilisant un *Websocket* sécurisé). Ainsi, selon l'invention, une technique de tatouage numérique ayant un faible niveau de sécurité peut être utilisée.

En outre, au vu des contraintes de robustesse aux traitements audio, de débit de données et de sécurité exposées ci-dessus, la première unité de traitement 2A du boitier décodeur 2 et la deuxième unité de traitement 3A de l'enceinte audio 3 ne nécessitent pas de mobiliser une puissance de calcul, c'est-à-dire de ressource machine, importante.

En outre, sachant que le flux audio sortant est restitué par le haut-parleur 3C de l'enceinte audio 3, les données d'identification sont également restituées par ledit haut-parleur 3C. De la même manière, le flux audio sortant (donc aussi les données d'identification) pourra être restitué par un équipement de restitution audio n'intégrant pas l'invention (par exemple, une enceinte audio additionnelle connectée à une sortie audio du boitier décodeur), c'est-à-dire un équipement ne comprenant pas une unité de traitement agencée pour extraire et décoder des données d'identification - tatouage numérique - et pour transmettre une valeur de latence audio. Pour ces raisons, la technique de tatouage numérique est donc de préférence une technique qui affecte très peu le flux audio.

Avantageusement, la deuxième unité de traitement 3A de l'enceinte audio 3 est agencée pour retirer les données d'identification intégrées dans le flux audio sortant de telle sorte que ladite enceinte audio 3 ne restitue pas lesdites données d'identification.

Avantageusement, les données d'identification peuvent être transmises dans un spectre fréquentiel sonore inaudible par l'oreille humaine (par exemple au-delà de 20kHz ou 21kHz). Généralement, le flux audio est filtré pour rejeter les composantes situées hors du spectre fréquentiel sonore audible par l'oreille humaine. Les données d'identification peuvent être introduites à la suite de ce filtrage, sous formes de trames, dans un spectre fréquentiel sonore inaudible. Il est ainsi assuré que les données d'identification sont inaudibles pour un utilisateur. En outre, sachant que les données d'identification sont distinctes des données audios du flux audio sortant, il est facile d'extraire lesdites données d'identification dudit flux audio sortant.

Si le lien audio unidirectionnel 5 est un lien analogique, les données d'identification peuvent être transmises par un signal électrique ayant une fréquence n'appartenant pas à un spectre fréquentiel sonore audible pour une oreille humaine.

Si le lien audio unidirectionnel 5 est un lien numérique, les données d'identification peuvent être intégrées dans des trames de données spécifiques séparées des trames de données audio intégrant des données audios du flux audio sortant.

Par exemple, si le lien de communication audio est un lien numérique S/PDIF, les données d'identification peuvent être intégrées dans des trames de données « user data » qui sont directement séparées des données audio. Aucun traitement de filtrage n'est donc requis. Les trames de données « user data » d'un lien numérique S/PDIF sont définies dans le standard IEC 609583 qui précise que le format des données « user data » n'est pas imposé (seule la façon de transmettre lesdites données « user data » est définie). Pour un lien numérique S/PDIF, un bloc de données comprend 192 trames de données, chaque trame de données comprenant deux sous-trames de données. Une sous-trame de données intègre :
- un préambule permettant d'identifier le début d'un bloc de données ou d'une sous-trame de données ;
- 4 bits de données auxiliaires ;
- 20 bits de données audio ;
- 1 bit de validité permettant d'indiquer l'intégrité et la validité des données ;
- 1 bit « user bit » suite à 192 trames de données formant un bloc de données « user data » ;
- 1 bit de canal suite à 192 trames de données formant un bloc de données « channel status » ;

Les blocs de données « user data » d'un lien S/PDIF peuvent donc être utilisés pour transmettre les données d'identification à l'enceinte audio 3 dans le cas où le lien audio unidirectionnel 5 est un lien numérique S/PDIF.

Il est également prévu que la première unité de traitement 2A du boitier décodeur 2 puisse remettre le délai vidéo à zéro suivant trois méthodes distinctes.

Selon une première méthode, la première unité de traitement 2A est agencée pour recevoir une heure d'expiration (par exemple, une heure UTC POSIX) via le lien de communication 6, l'heure d'expiration étant une heure à partir de laquelle ladite première unité de traitement 2A remet le délai vidéo à zéro.

Selon une deuxième méthode, la première unité de traitement 2A est agencée pour démarrer un décompteur (par exemple un compte à rebours) lorsque la valeur de latence audio est reçue. Lorsque le décompteur est dans un état prédéterminé (par exemple, lorsque le compte à rebours a échu) alors la première unité de traitement 2A est en outre agencée pour remettre le délai vidéo à zéro.

Selon une troisième méthode, lorsque la première unité de traitement 2A a introduit les données d'identification un nombre de fois égal à un nombre prédéterminé (par exemple 2 fois) sans recevoir la valeur de latence audio via le lien de communication 6 (par exemple, sans que l'interface de programmation ne soit appelée) alors ladite première unité de traitement 2A remet le délai vidéo à zéro.

La première unité de traitement 2A du boitier décodeur 2 met donc en oeuvre un procédé de diffusion audio-vidéo comprenant les étapes de :
- introduire les données d'identification dans le flux audio entrant pour produire le flux audio sortant, les données d'identification comprenant au moins l'identifiant du boitier décodeur 2 ;
- transmettre ledit flux audio sortant à l'enceinte audio 3 via le lien audio unidirectionnel 5 pour que ladite enceinte audio 3 restitue ledit flux audio sortant via le haut-parleur 3C ;
- recevoir, via le lien de communication 6, la valeur de latence audio induite par l'enceinte audio 3 ;
- synchroniser un flux vidéo sortant, produit à partir du flux vidéo entrant, avec le flux audio sortant en utilisant la valeur de latence audio, et faire restituer le flux vidéo sortant.

La deuxième unité de traitement 3A met donc en oeuvre un procédé de restitution audio comprenant les étapes de :
- acquérir le flux audio sortant ;
- extraire et décoder les données d'identification intégrées dans le flux audio sortant, les données d'identification comprenant au moins l'identifiant du boitier décodeur 2 ;
- transmettre la valeur de latence audio induite par l'enceinte audio 3, via le lien de communication 6, au boitier décodeur 2 ;
- restituer le flux audio sortant via le haut-parleur 3C.

Le boitier décodeur 2 selon l'invention est donc particulièrement avantageux car un utilisateur a simplement besoin de connecter le boitier décodeur 2 et l'enceinte audio 3 via le lien audio unidirectionnel 5 et le lien de communication 6 pour que la synchronisation de la restitution du flux vidéo sortant et du flux audio sortant soit effectuée. Aucune initiative de la part de l'utilisateur n'est donc requise.

En outre, la transmission des données d'identification via le lien audio unidirectionnel 5 et la réception de la valeur de latence audio via le lien de communication 6 sont des échanges de données simples et qui ne nécessitent pas d'interrompre la restitution du flux audio sortant et du flux audio sortant.

Bien entendu, l'invention n'est pas limitée aux modes de réalisation décrits mais englobe toute variante entrant dans le champ de l'invention telle que définie par les revendications.

L'équipement de diffusion audio-vidéo n'est pas nécessairement un boitier décodeur, mais pourrait être un autre équipement : télévision, console de jeux, etc.

La sortie audio 2B du boitier décodeur 2 peut également être une sortie audio Bluetooth. Le lien audio unidirectionnel 5 peut ainsi être un lien non filaire. L'enceinte audio 3 comporte ainsi une entrée audio 3B qui est une entrée audio Bluetooth.

En outre, il a ici été décrit que la première unité de traitement 2A synchronise le flux vidéo sortant avec le flux audio sortant en appliquant, au flux vidéo entrant, un délai vidéo égal à la valeur de latence audio pour produire ledit flux vidéo sortant ; mais il est possible que la première unité de traitement 2A synchronise le flux vidéo sortant avec le flux audio sortant en appliquant, au flux audio sortant, une avance audio égale à la valeur de latence audio. La deuxième unité de traitement 2A du boitier décodeur 2 pourrait donc « avancer » l'audio à la place de « retarder » la vidéo.

## Revendications

1. Boîtier décodeur audio-vidéo (2) agencé pour recevoir un flux audio-vidéo comprenant un flux audio entrant et un flux vidéo entrant, le boîtier décodeur audio-vidéo (2) étant destiné à être connecté à un équipement de restitution audio (3) via un lien audio unidirectionnel (5) et via un lien de communication (6),
le boîtier décodeur audio-vidéo (2) comportant une première unité de traitement (2A) agencée pour :
- introduire des données d'identification dans le flux audio entrant pour produire un flux audio sortant (F_{AS}), les données d'identification comprenant au moins un identifiant du boîtier décodeur audio-vidéo ;
- transmettre ledit flux audio sortant à l'équipement de restitution audio (3) via le lien audio unidirectionnel (5) pour que ledit équipement de restitution audio (3) restitue ledit flux audio sortant via au moins un haut-parleur (3C) ;
- recevoir, via le lien de communication (6), une valeur de latence audio induite par l'équipement de restitution audio (3) ;
- synchroniser un flux vidéo sortant (FVS), produit à partir du flux vidéo entrant, avec le flux audio sortant, en utilisant la valeur de latence audio, et faire restituer le flux vidéo sortant, la première unité de traitement étant agencée pour synchroniser le flux vidéo sortant avec le flux audio sortant en appliquant, au flux vidéo entrant, un délai vidéo égal à la valeur de latence audio pour produire ledit flux vidéo sortant.

2. Boîtier décodeur audio-vidéo selon la revendication 1, le lien de communication (6) étant un réseau de communication, la première unité de traitement (2A) étant agencée pour mettre en oeuvre une interface de programmation et pour utiliser l'interface de programmation pour recevoir la valeur de latence audio.

3. Boîtier décodeur audio-vidéo selon la revendication 2, les données d'identification comportant une information indiquant que ledit boîtier décodeur audio-vidéo (2) supporte l'interface de programmation.

4. Boîtier décodeur audio-vidéo selon la revendication 3, les données d'identification comportant en outre une adresse réseau dudit boîtier décodeur audio-vidéo (2) dans le réseau de communication.

5. Boîtier décodeur audio-vidéo selon l'une des revendications précédentes, le lien audio unidirectionnel (5) étant un lien analogique, les données d'identification étant transmises par un signal électrique ayant une fréquence n'appartenant pas à un spectre fréquentiel sonore audible pour une oreille humaine.

6. Boîtier décodeur audio-vidéo selon l'une des revendications 1 à 4, le lien audio unidirectionnel (5) étant un lien numérique, les données d'identification étant intégrées dans des trames de données spécifiques séparées des trames de données audio intégrant des données audio du flux audio sortant.

7. Boîtier décodeur audio-vidéo selon la revendication 1, la première unité de traitement (2A) étant en outre agencée pour recevoir une heure d'expiration via le lien de communication (6), l'heure d'expiration étant une heure à partir de laquelle ladite première unité de traitement (2A) remet le délai vidéo à zéro.

8. Boîtier décodeur audio-vidéo selon la revendication 1, la première unité de traitement (2A) étant agencée pour démarrer un décompteur lorsque la valeur de latence audio est reçue, la première unité de traitement (2A) étant en outre agencée pour remettre le délai vidéo à zéro lorsque ledit décompteur est dans un état prédéterminé.

9. Boîtier décodeur audio-vidéo selon la revendication 1, dans lequel, lorsque la première unité de traitement (2A) a introduit les données d'identification un nombre de fois égal à un nombre prédéterminé sans recevoir la valeur de latence audio, alors ladite première unité de traitement (2A) remet le délai vidéo à zéro.

10. Procédé de diffusion audio-vidéo, mis en oeuvre dans la première unité de traitement (2A) d'un boîtier décodeur audio-vidéo (2) selon l'une des revendications précédentes, comprenant les étapes de :
- introduire les données d'identification dans le flux audio entrant pour produire le flux audio sortant, les données d'identification comprenant au moins l'identifiant du boîtier décodeur audio-vidéo (2) ;
- transmettre ledit flux audio sortant à l'équipement de restitution audio (3) via le lien audio unidirectionnel (5) pour que ledit équipement de restitution audio (3) restitue ledit flux audio sortant via au moins un haut-parleur (3C) ;
- recevoir, via le lien de communication (6), la valeur de latence audio induite par l'équipement de restitution audio (3) ;
- synchroniser un flux vidéo sortant, produit à partir du flux vidéo entrant, avec le flux audio sortant en utilisant la valeur de latence, et faire restituer le flux vidéo sortant, la synchronisation consistant à appliquer, au flux vidéo entrant, un délai vidéo égal à la valeur de latence audio pour produire ledit flux vidéo sortant.

11. Programme d'ordinateur comprenant des instructions qui, lorsqu'elles sont exécutées par la première unité de traitement (2A) du boîtier décodeur audio-vidéo (2) selon l'une des revendications 1 à 9, conduisent ce dernier à mettre en oeuvre le procédé de diffusion audio-vidéo selon la revendication 10.

12. Support d'enregistrement lisible par ordinateur, sur lequel est enregistré le programme d'ordinateur selon la revendication 11.

13. Equipement de restitution audio comportant au moins un haut-parleur (3C) et agencé pour être connecté à un boîtier décodeur audio-vidéo (2) via un lien audio unidirectionnel (5) et un lien de communication (6), et pour restituer via le ou les haut-parleurs (3C) un flux audio sortant qui lui est transmis par le boîtier décodeur audio-vidéo (2) via le lien audio unidirectionnel (5),
l'équipement de restitution audio (3) comprenant en outre une deuxième unité de traitement (3A) agencée pour :
- acquérir le flux audio sortant ;
- extraire et décoder des données d'identification intégrées dans le flux audio sortant, les données d'identification comprenant au moins un identifiant du boîtier décodeur audio-vidéo (2) ;
- transmettre une valeur de latence audio induite par ledit équipement de restitution audio, via le lien de communication (6), au boîtier décodeur audio-vidéo (2) en utilisant les données d'identification décodées pour se connecter au décodeur.

14. Equipement de restitution audio selon la revendication 13, la deuxième unité de traitement (3A) étant agencée pour retirer les données d'identification intégrées dans le flux audio sortant de telle sorte que l'équipement de restitution audio (3) ne restitue pas lesdites données d'identification.

15. Equipement de restitution audio selon l'une des revendications 13 ou 14, l'équipement de restitution audio (3) étant une enceinte audio.

16. Procédé de restitution audio, mis en oeuvre dans la deuxième unité de traitement (3A) d'un équipement de restitution audio (3) selon l'une des revendications 13 à 15, comprenant les étapes de :
- acquérir le flux audio sortant ;
- extraire et décoder les données d'identification intégrées dans le flux audio sortant, les données d'identification comprenant au moins l'identifiant du boîtier décodeur audio-vidéo (2) ;
- transmettre la valeur de latence audio induite par ledit équipement de restitution audio (3), via le lien de communication (6), au boîtier décodeur audio-vidéo (2) en utilisant les données d'identification décodées pour se connecter au décodeur;
- restituer le flux audio sortant via le ou les haut-parleurs (3C) .

17. Programme d'ordinateur comprenant des instructions qui, lorsqu'elles sont exécutées par la deuxième unité de traitement (3A) de l'équipement de restitution audio selon l'une des revendications 13 à 15, conduisent ce dernier à mettre en oeuvre le procédé de restitution audio selon la revendication 16.

18. Support d'enregistrement lisible par ordinateur, sur lequel est enregistré le programme d'ordinateur selon la revendication 17.

## Patentansprüche

1. Audio-Video-Decoderbox (2), die derart eingerichtet ist, dass sie einen Audio-VideoStrom empfängt, der einen eingehenden Audiostrom und einen eingehenden Videostrom umfasst, wobei die Audio-Video-Decoderbox (2) dazu vorgesehen ist, über eine unidirektionale Audioverbindung (5) und über eine Kommunikationsverbindung (6) an ein Audiowiedergabegerät (3) angeschlossen zu werden,
wobei die Audio-Video-Decoderbox (2) eine erste Verarbeitungseinheit (2A) enthält, die derart eingerichtet ist, dass sie:
- Identifikationsdaten in den eingehenden Audiostrom eingibt, um einen ausgehenden Audiostrom (F_{AS}) zu erzeugen, wobei die Identifikationsdaten zumindest eine Kennung der Audio-Video-Decoderbox umfassen;
- den ausgehenden Audiostrom über die unidirektionale Audioverbindung (5) an das Audiowiedergabegerät (3) überträgt, damit das Audiowiedergabegerät (3) den ausgehenden Audiostrom über zumindest einen Lautsprecher (3C) wiedergibt;
- über die Kommunikationsverbindung (6) einen Audio-Latenzwert empfängt, der von dem Audiowiedergabegerät (3) induziert wurde;
- den ausgehenden Videostrom (FVS), der aus dem eingehenden Videostrom erzeugt wurde, unter Verwendung des Audio-Latenzwerts mit dem ausgehenden Audiostrom synchronisiert und die Wiedergabe des ausgehenden Videostroms vornimmt, wobei die erste Verarbeitungseinheit derart eingerichtet ist, dass sie im Rahmen der Erzeugung des ausgehenden Videostroms den ausgehenden Videostrom mit dem ausgehenden Audiostrom synchronisiert, indem sie auf den eingehenden Videostrom eine Videoverzögerung anwendet, die dem Audio-Latenzwert entspricht.

2. Audio-Video-Decoderbox nach Anspruch 1, wobei es sich bei der Kommunikationsverbindung (6) um ein Kommunikationsnetzwerk handelt, wobei die erste Verarbeitungseinheit (2A) derart eingerichtet ist, dass sie eine Programmierschnittstelle ausführt und die Programmierschnittstelle dazu verwendet, den Audio-Latenzwert zu empfangen.

3. Audio-Video-Decoderbox nach Anspruch 2, wobei die Identifikationsdaten eine Information enthalten, die angibt, dass die Audio-Video-Decoderbox (2) die Programmierschnittstelle unterstützt.

4. Audio-Video-Decoderbox nach Anspruch 3, wobei die Identifikationsdaten ferner eine Netzwerkadresse der Audio-Video-Decoderbox (2) im Kommunikationsnetzwerk enthalten.

5. Audio-Video-Decoderbox nach einem der vorhergehenden Ansprüche, wobei es sich bei der unidirektionalen Audioverbindung (5) um eine analoge Verbindung handelt, wobei die Identifikationsdaten von einem elektrischen Signal übertragen werden, dessen Frequenz außerhalb eines für das menschliche Ohr hörbaren Ton-Frequenzspektrums liegt.

6. Audio-Video-Decoderbox nach einem der Ansprüche 1 bis 4, wobei es sich bei der unidirektionalen Audioverbindung (5) um eine digitale Verbindung handelt, wobei die Identifikationsdaten in spezifischen Datenrahmen integriert sind, die von den Audiodatenrahmen für die Audiodaten aus dem ausgehenden Audiostrom getrennt sind.

7. Audio-Video-Decoderbox nach Anspruch 1, wobei die erste Verarbeitungseinheit (2A) ferner derart eingerichtet ist, dass sie über die Kommunikationsverbindung (6) eine Ablaufzeit empfängt, wobei es sich bei der Ablaufzeit um eine Zeit handelt, nach deren Verstreichen die erste Verarbeitungseinheit (2A) die Videoverzögerung auf Null zurücksetzt.

8. Audio-Video-Decoderbox nach Anspruch 1, wobei die erste Verarbeitungseinheit (2A) derart eingerichtet ist, dass sie einen Rückwärtszähler startet, wenn der Audio-Latenzwert empfangen wird, wobei die erste Verarbeitungseinheit (2A) ferner derart eingerichtet ist, dass sie die Videoverzögerung auf Null zurücksetzt, wenn sich der Rückwärtszähler in einem vorbestimmten Zustand befindet.

9. Audio-Video-Decoderbox nach Anspruch 1, wobei, wenn die erste Verarbeitungseinheit (2A) die Identifikationsdaten eine Anzahl von Malen eingegeben hat, die einer vorbestimmten Anzahl entspricht, ohne den Audio-Latenzwert zu empfangen, die erste Verarbeitungseinheit (2A) die Videoverzögerung auf Null zurücksetzt.

10. Verfahren zur Audio-Video-Wiedergabe, welches in der ersten Verarbeitungseinheit (2A) einer Audio-Video-Decoderbox (2) nach einem der vorhergehenden Ansprüche ausgeführt wird, und welches die Schritte umfasst, dass:
- die Identifikationsdaten in den eingehenden Audiostrom eingegeben werden, um den ausgehenden Audiostrom zu erzeugen, wobei die Identifikationsdaten zumindest die Kennung der Audio-Video-Decoderbox (2) umfassen;
- der ausgehende Audiostrom über die unidirektionale Audioverbindung (5) an das Audiowiedergabegerät (3) übertragen wird, damit das Audiowiedergabegerät (3) den ausgehenden Audiostrom über zumindest einen Lautsprecher (3C) wiedergibt;
- der von der Audiowiedergabeeinrichtung (3) induzierte Audio-Latenzwert über die Kommunikationsverbindung (6) empfangen wird;
- ein ausgehender Videostrom, der aus dem eingehenden Videostrom erzeugt wurde, unter Verwendung des Latenzwerts mit dem ausgehenden Audiostrom synchronisiert wird und der ausgehende Videostrom wiedergeben wird, wobei die Synchronisierung darin besteht, dass zur Erzeugung des ausgehenden Videostroms auf den eingehenden Videostrom eine Videoverzögerung angewendet wird, die dem Audio-Latenzwert entspricht.

11. Computerprogramm, welches Befehle umfasst, die, wenn sie von der ersten Verarbeitungseinheit (2A) der Audio-Video-Decoderbox (2) nach einem der Ansprüche 1 bis 9 ausgeführt werden, diese dazu veranlassen, das Verfahren zur Audio-Video-Wiedergabe nach Anspruch 10 auszuführen.

12. Computerlesbares Speichermedium, auf welchem das Computerprogramm nach Anspruch 11 abgespeichert ist.

13. Audiowiedergabegerät, welches zumindest einen Lautsprecher (3C) enthält und derart eingerichtet ist, dass es über eine unidirektionale Audioverbindung (5) und über eine Kommunikationsverbindung (6) mit einer Audio-Video-Decoderbox (2) verbunden ist und über den oder die Lautsprecher (3C) einen von der Audio-Video-Decoderbox (2) über die unidirektionale Audioverbindung (5) übertragenen, ausgehenden Audiostrom wiedergibt,
wobei das Audiowiedergabegerät (3) ferner eine zweite Verarbeitungseinheit (3A) umfasst, die derart eingerichtet ist, dass sie:
- den ausgehenden Audiostrom erfasst;
- Identifikationsdaten, die in dem ausgehenden Audiostrom integriert sind, extrahiert und decodiert, wobei die Identifikationsdaten zumindest eine Kennung der Audio-Video-Decoderbox (2) umfassen;
- einen von dem Audiowiedergabegerät induzierten Audio-Latenzwert über die Kommunikationsverbindung (6) an die Audio-Video-Decoderbox (2) überträgt und dabei die decodierten Identifikationsdaten dazu verwendet, sich mit dem Decoder zu verbinden.

14. Audiowiedergabegerät nach Anspruch 13, wobei die zweite Verarbeitungseinheit (3A) derart eingerichtet ist, dass sie die in dem ausgehenden Audiostrom integrierten Identifikationsdaten entfernt, sodass das Audiowiedergabegerät (3) die Identifikationsdaten nicht wiedergibt.

15. Audiowiedergabegerät nach einem der Ansprüche 13 oder 14, wobei es sich bei dem Audiowiedergabegerät (3) um eine Audiobox handelt.

16. Verfahren zur Audio-Wiedergabe, welches in der zweiten Verarbeitungseinheit (3A) eines Audiowiedergabegeräts (3) nach einem der Ansprüche 13 bis 15 ausgeführt wird, und welches die Schritte umfasst, dass:
- der ausgehende Audiostrom erfasst wird;
- die in dem ausgehenden Audiostrom integrierten Identifikationsdaten extrahiert und decodiert werden, wobei die Identifikationsdaten zumindest die Kennung der Audio-Video-Decoderbox (2) umfassen;
- der von dem Audiowiedergabegerät (3) induzierte Audio-Latenzwert über die Kommunikationsverbindung (6) an die Audio-Video-Decoderbox (2) übertragen wird und dabei die decodierten Identifikationsdaten dazu verwendet werden, sich mit dem Decoder zu verbinden;
- der ausgehende Audiostrom über den oder die Lautsprecher (3C) wiedergegeben wird.

17. Computerprogramm, welches Befehle umfasst, die, wenn sie von der zweiten Verarbeitungseinheit (3A) des Audio-Wiedergabegeräts nach einem der Ansprüche 13 bis 15 ausgeführt werden, dieses dazu veranlassen, das Verfahren zur Audiowiedergabe nach Anspruch 16 auszuführen.

18. Computerlesbares Speichermedium, auf welchem das Computerprogramm nach Anspruch 17 abgespeichert ist.

## Claims

1. Set-top box (2) arranged to receive an audio-video stream comprising an inbound audio stream and an inbound video stream, the audio-video broadcasting equipment (2) being intended to be connected to audio reproduction equipment (3) via a one-directional audio link (5) and via a communication link (6),
the audio-video broadcasting equipment (2) comprising a first processing unit (2A) arranged to:
introduce identification data into the inbound audio stream to produce an outbound audio stream (FAS), the identification data comprising at least one identifier of the audio-video broadcasting equipment;
transmit said outbound audio stream to the audio reproduction equipment (3) via the one-directional audio link (5), such that said audio reproduction equipment (3) reproduces said outbound audio stream via at least one speaker (3C);
receive, via the communication link (6), an audio latency value induced by the audio reproduction equipment (3) ;
synchronise an outbound video stream (FVS), produced from the inbound video stream, with the outbound audio stream, by using the audio latency value, and reproducing the outbound video stream,
the first processing unit (2A) being arranged to synchronise the outbound video stream with the outbound audio stream by applying, to the inbound video stream, a video delay equal to the audio latency value to produce said outbound video stream.

2. Set-top box according to claim 1, the communication link (6) being a communication network, the first processing unit (2A) being arranged to implement a programming interface and to use the programming interface to receive the audio latency value.

3. Set-top box according to claim 2, the identification data comprising information indicating that said audio-video broadcasting equipment (2) supports the programming interface.

4. Set-top box according to claim 3, the identification data further comprising a network address of said audio-video broadcasting equipment (2) in the communication network.

5. Set-top box according to one of the preceding claims, the one-directional audio link (5) being an analogue link, the identification data being transmitted by an electric signal having a frequency not belonging to a sound frequency spectrum that is audible for a human ear.

6. Set-top box according to one of claims 1 to 4, the one-directional audio link (5) being a digital link, the identification data being integrated in specific data frames separated from the audio data frames integrating audio data of the outbound audio stream.

7. Set-top box according to claim 1, the first processing unit (2A) being further arranged to receive an expiration time via the communication link (6), the expiration time being one hour from which said first processing unit (2A) resets the video delay.

8. Set-top box according to claim 1, the first processing unit (2A) being arranged to start a counter when the audio latency value is received, the first processing unit (2A) being further arranged to reset the video delay when said counter is in a predetermined state.

9. Set-top box according to claim 1, wherein, when the first processing unit (2A) has introduced the identification data, a number of times equal to a predetermined number, without receiving the audio latency value, then said first processing unit (2A) resets the video delay.

10. Audio-video broadcasting method, implemented in the first processing unit (2A) of a set-top box (2) according to one of the preceding claims, comprising the steps of:
introducing the identification data into the inbound audio stream to produce the outbound audio stream, the identification data comprising at least the identifier of the audio-video broadcasting equipment (2);
transmitting said outbound audio stream to the audio reproduction equipment (3) via the one-directional audio link (5), such that said audio reproduction equipment (3) reproduces said outbound audio stream via at least one speaker (3C);
receiving, via the communication link (6), the audio latency value induced by the audio reproduction equipment (3) ;
synchronising an outbound video stream, produced from the inbound video stream, with the outbound audio stream by using the latency value, and reproducing the outbound video stream, the synchronisation consisting in applying, to the inbound video stream, a video delay equal to the audio latency value to produce said outbound video stream.

11. Computer program comprising instructions which, when they are executed by the first processing unit (2A) of the audio-video broadcasting equipment (2) according to one of claims 1 to 9, lead the latter to implement the audio-video broadcasting method according to claim 10.

12. Recording medium which can be read by a computer, on which the computer program is recorded, according to claim 11.

13. Audio reproduction equipment comprising at least one speaker (3C) and arranged to be connected to audio-video broadcasting equipment (2) via a one-directional audio link (5) and a communication link (6), and to reproduce via the speaker(s) (3C), an outbound audio stream which itself is transmitted by the audio-video broadcasting equipment (2) via the one-directional audio link (5),
the audio reproduction equipment (3) further comprising a second processing unit (3A) arranged to:
acquire the outbound audio stream;
extract and decode identification data integrated in the outbound audio stream, the identification data comprising at least one identifier of the audio-video broadcasting equipment (2);
transmit an audio latency value induced by said audio reproduction equipment, via the communication link (6), to the set-top box (2), by using the decoded identification data to connect to the set-top box.

14. Audio reproduction equipment according to claim 13, the second processing unit (3A) being arranged to remove the identification data integrated in the outbound audio stream, such that the audio reproduction equipment (3) does not reproduce said identification data.

15. Audio reproduction equipment according to one of claims 13 or 14, the audio reproduction equipment (3) being an audio speaker.

16. Audio reproduction method, implemented in the second processing unit (3A) of audio reproduction equipment (3) according to one of claims 13 to 15, comprising the steps of:
acquiring the outbound audio stream;
extracting and decoding the identification data integrated in the outbound audio stream, the identification data comprising at least the identifier of the audio-video broadcasting equipment (2);
transmitting the audio latency value induced by said audio reproduction equipment (3), via the communication link (6), to the set-top box (2), by using the decoded identification data to connect to the set-top box ;
reproducing the outbound audio stream via the speaker(s) (3C).

17. Computer program comprising instructions which, when they are executed by the second processing unit (3A) of the audio reproduction equipment according to one of claims 13 to 15, cause the latter to implement the audio reproduction method according to claim 16.

18. Recording medium which can be read by a computer, on which the computer program is recorded, according to claim 17.
